# FASCICULE DE BREVET EUROPEEN

(11) **EP 3 582 258 B1**
(45) Date de publication et mention de la délivrance du brevet: **29.01.2025**
(21) Numéro de dépôt: 19179834.7
(22) Date de dépôt: 12.06.2019
(51) Int. Cl.: H01L 23/00, H01L 31/08, G06F 21/86, H01L 31/173, G06F 21/75

(54) **PUCE ÉLECTRONIQUE PROTÉGÉE**
GESCHÜTZTER ELEKTRONISCHER CHIP
PROTECTED ELECTRONIC CHIP

(30) Priorité: 14.06.2018 FR 1870700
(43) Date de publication de la demande: 18.12.2019
(73) Titulaire: STMicroelectronics (Research & Development) Limited, Buckinghamshire SL7 1EY (GB); STMicroelectronics (Rousset) SAS, 13790 Rousset (FR)
(72) Inventeur: LISART, Mathieu, 13100 AIX EN PROVENCE (FR); RAE, Bruce, EDINBURGH, EH10 6UX (GB)
(74) Mandataire: Cabinet Beaumont

(56) Documents cités:
- WO-A2-2008/102282
- WO-A2-2009/016589

## Description

### Domaine

La présente description concerne de façon générale les puces électroniques, et en particulier la protection d'une puce contre des attaques.

### Exposé de l'art antérieur

Des puces contenant des informations dont l'accès est réservé à des personnes autorisées, telles que des puces de carte bancaire, sont susceptibles d'être la cible d'attaques.

Divers types d'attaques peuvent être menés à partir de la face arrière d'une puce, opposée à celle où sont situés des circuits contenant les informations. Dans un type d'attaque, l'attaquant grave une partie de la face arrière jusqu'à atteindre des éléments des circuits tels que, par exemple, des transistors ou des diodes. Pour cela, l'attaquant peut utiliser un faisceau ionique focalisé FIB ("Focused Ion Beam"). L'attaquant peut ainsi accéder à ces éléments, par lesquels il soutire des informations. Dans d'autres types d'attaques par la face arrière, l'attaquant perturbe le fonctionnement du circuit au moyen d'un laser ou par application contre la face arrière d'une sonde portée à une tension élevée. L'attaquant déduit alors les informations convoitées de l'effet de ces perturbations, couramment appelées ("fautes"). L'attaquant peut aussi utiliser diverses techniques d'observation du fonctionnement de la puce à partir de la face arrière, par exemple par cartographie de divers types d'émissions électromagnétiques ou photoniques produites par les circuits de la puce en fonctionnement.

La demande de brevet WO2008/102282 divulgue une puce électronique comprenant un substrat ayant des faces recouvertes par un premier et un deuxième écran, et avec au moins deux détecteurs de photons.

La demande de brevet WO2009/016589 divulgue des dispositifs semiconducteurs protégés contre des attaques.

### Résumé

Un mode de réalisation pallie tout ou partie des inconvénients des puces électroniques connues.

Un mode de réalisation pallie tout ou partie des inconvénients des dispositifs connus de protection contre des attaques.

Ainsi, un dispositif conforme à la présente invention prévoit une puce électronique selon la revendication 1.

Selon un mode de réalisation, le premier écran et/ou le deuxième écran est métallique.

Selon un mode de réalisation, le premier et/ou le deuxième écran présente une surface pleine à l'aplomb du premier détecteur, de préférence s'étendant horizontalement dans toutes les directions à partir dudit aplomb sur au moins une première distance supérieure à une deuxième distance séparant l'écran considéré de la face avant du substrat.

Selon un mode de réalisation, la puce comprend une source de photons, de préférence comprenant un oscillateur en anneau, agencée pour émettre des photons vers une face du deuxième écran tournée vers le premier détecteur.

Selon un mode de réalisation, le premier détecteur comprend une diode SPAD.

Une méthode conforme à la présente invention prévoit un procédé de protection selon la revendication 6.

Selon un mode de réalisation, le procédé comprend une étape de mesure d'une valeur représentative d'un nombre de photons détectés par le premier détecteur pendant une durée.

Selon un mode de réalisation, le procédé comprend une étape de détection d'un écart entre la valeur mesurée et une valeur attendue.

Selon un mode de réalisation, le procédé comprend une étape de comparaison de la valeur mesurée à un seuil.

Selon un mode de réalisation, le seuil est une valeur représentative d'un nombre de photons détectés par le deuxième détecteur pendant ladite durée.

Selon un mode de réalisation, le procédé comprend une étape de sélection d'une ou plusieurs sources de photons.

Selon un mode de réalisation, l'étape de sélection comprend la sélection aléatoire d'un groupe de sources de photons parmi plusieurs groupes prédéfinis, les sources de photons sélectionnées étant celles du groupe de photons sélectionné.

Selon un mode de réalisation, le procédé comprend une étape d'émission de photons vers le deuxième écran par les sources de photons sélectionnées.

### Bref exposé des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe, partielle et schématique, illustrant un mode de réalisation d'une puce électronique qui n'est pas une réalisation de la présente invention ;
la figure 2 est une vue en coupe, partielle et schématique, de la puce de la figure 1 au cours d'une tentative d'attaque ;
la figure 3 est une vue en coupe, partielle et schématique, d'une variante de réalisation de la puce de la figure 1 qui constitue un mode de réalisation de la présente invention ;
la figure 4 est une vue en coupe, partielle et schématique, d'une autre variante de réalisation de la puce de la figure 1 qui n'est pas une réalisation de la présente invention ;
la figure 5 est une vue en coupe, partielle et schématique, d'encore une autre variante de réalisation de la puce de la figure 1 qui n'est pas une réalisation de la présente invention ;
la figure 6 illustre de manière schématique un mode de réalisation d'un circuit à protéger et d'un détecteur de photons de la puce de la figure 1 ;
la figure 7 illustre schématiquement un mode de réalisation d'une source de photons de la puce de la figure 1 qui n'est pas une réalisation de la présente invention ;
la figure 8 est une vue de dessus illustrant de manière partielle et schématique une variante de réalisation de la puce de la figure 1 qui n'est pas une réalisation de la présente invention ;
la figure 9 illustre des étapes d'un exemple de mise en oeuvre d'un procédé de protection d'une puce électronique qui n'est pas une réalisation de la présente invention ; et
la figure 10 illustre deux étapes 10A et 10B du procédé de la figure 9.

### Exposé détaillé

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des circuits d'une puce, dont des circuits de commande et de recharge d'une diode SPAD, ne sont ni représentés, ni décrits en détail, les modes de réalisation décrits étant compatibles avec la plupart des circuits courants de puce et des circuits courants de commande et de recharge d'une diode SPAD.

Dans la description qui suit, lorsque l'on fait référence à des qualificatifs de position absolue, tels que les termes "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la présente description, sauf indication contraire, le terme "connecté" désigne une connexion électrique directe entre deux éléments, par exemple par des matériaux conducteurs, tandis que le terme "couplé" ou "relié" désigne une connexion électrique entre deux éléments qui peut être directe ou par l'intermédiaire d'un ou de plusieurs composants passifs ou actifs, comme des résistances, des condensateurs, des inductances, des diodes, des transistors, etc.

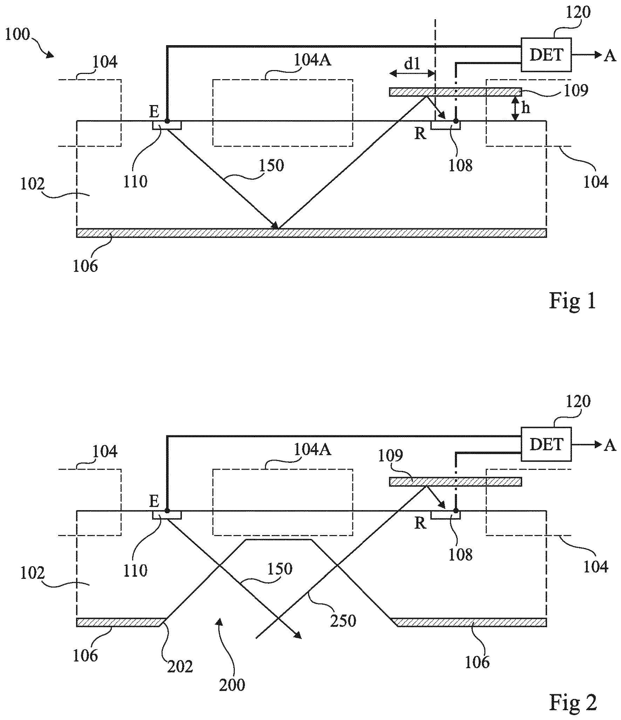

La figure 1 est une vue en coupe, partielle et schématique, illustrant un mode de réalisation d'une puce électronique 100. Une puce électronique est constituée d'un substrat semiconducteur et d'éléments entièrement situés dans le substrat et/ou sur des faces opposées du substrat, ces éléments comprenant des circuits électroniques. Les faces opposées correspondent aux faces avant et arrière du substrat.

De préférence, la puce 100 comprend un substrat 102 dans et sur lequel sont formés des circuits 104. Le substrat 102 est par exemple une portion de tranche semiconductrice, par exemple en silicium. Les circuits 104 sont situés du côté de la face avant de la puce 100. Chaque circuit 104 comprend plusieurs composants interconnectés, par exemple des transistors (non représentés). A titre d'exemple, parmi les circuits 104, un circuit à protéger 104A contient des éléments à protéger contre des attaques. La puce peut comprendre plusieurs, voire uniquement des, circuits à protéger.

La puce 100 comprend un écran 106, de préférence métallique. L'écran 106 recouvre le substrat 102 du côté de la face arrière. L'écran 106 est par exemple formé d'une couche d'aluminium ou de cuivre. De préférence, l'écran 106 recouvre intégralement la partie de la face arrière située sous les éléments à protéger du circuit 104A.

L'écran 106 permet d'empêcher toute attaque par la face arrière qui laisserait l'écran 106 intact, par exemple des attaques visant à perturber le fonctionnement des circuits par application d'un laser ou d'un potentiel élevé sur la face arrière, ou visant à analyser des émissions produites par les composants du circuit 104A.

La puce 100 comprend en outre un détecteur de photons 108, de préférence situé dans et sur la face avant de la puce 100. Le détecteur 108 comprend par exemple une diode à avalanche de détection de photons individuels, ou diode SPAD ("Single Photon Avalanche Diode"). Le détecteur 108 est situé sous un écran 109. L'écran 109 est de préférence une portion de couche métallique, par exemple en aluminium ou en cuivre. L'écran 109 est de préférence situé dans des couches isolantes recouvrant la face avant du substrat 102, par exemple à un niveau de pistes conductrices métalliques d'interconnexion entre les composants des circuits 104 de la puce.

De préférence, l'écran 109 s'étend horizontalement à partir de l'aplomb du détecteur 108, par exemple sur au moins une distance d1. La distance d1 est de préférence supérieure, par exemple deux fois supérieure, à une distance h séparant l'écran 109 de la face avant du substrat. La distance d1 est par exemple comptée à partir de l'aplomb d'un bord d'une région du détecteur sensible aux photons. A titre d'exemple, la distance d1 est supérieure à 5 µm, de préférence supérieure à 10 µm. De préférence, l'écran 109 s'étend dans toutes les directions à partir de l'aplomb du détecteur jusqu'à au moins la distance d1. L'écran 109 présente ainsi une surface pleine, exempte d'ouverture, jusqu'à au moins la distance d1 de l'aplomb. On évite ainsi que des photons arrivant sur la puce du côté de la face avant parviennent jusqu'au détecteur 108.

De préférence, la puce 100 comprend en outre une source de photons 110 (E), agencée pour émettre des photons vers l'écran 106 lorsque la source 110 est activée. La source 110 et le détecteur 108 peuvent être reliés à un circuit 120 (DET) . Le circuit 120 est par exemple un circuit formé dans et sur le substrat 102.

A titre d'exemple, une phase de test est prévue, de préférence pendant une phase de démarrage de la puce. Pendant la phase de test, le circuit 120 compte les photons détectés par le détecteur 108, par exemple pendant une durée T prédéfinie. Pour cela, le circuit 120 peut comprendre en particulier un circuit de commande de la diode SPAD permettant de recharger la diode SPAD après la détection de chaque photon. Le circuit 120 déduit du nombre de photons détectés pendant la durée T une valeur mesurée de fréquence d'arrivée des photons, par exemple le rapport entre le nombre de photons détectés et la durée T. A titre d'exemple, le circuit 120 calcule un écart entre la valeur mesurée et une valeur attendue. En cas d'écart supérieur à un seuil, le circuit 120 émet un signal A. De préférence, pendant le test, le circuit 120 active la source 110 qui émet alors des photons 150.

En l'absence d'attaque, des photons sont émis par la source 110, parmi lesquels des photons 150 sont émis en direction de l'écran 106. Les photons 150 sont réfléchis par l'écran 106. Certains des photons 150, par exemple après réflexion sur l'écran 109, parviennent au détecteur 108. On prévoit pour cela que la longueur d'onde d'au moins une partie des photons émis par la source 110 soit de préférence supérieure à 900 nm, par exemple inférieure à 1000 nm. Dans le cas d'un substrat en silicium, une telle longueur d'onde permet aux photons 150 de traverser le silicium sur une longueur suffisante pour se propager jusqu'au détecteur 108. Pour cela, on prévoit par exemple que le niveau de dopage du substrat soit faible, typiquement inférieur à environ 10¹⁷ atomes/cm³. La distance séparant la source 110 du détecteur 108 est de préférence inférieure à 200 µm, par exemple inférieure à 100 µm.

La figure 2 est une vue en coupe, partielle et schématique, de la puce de la figure 1 au cours d'un exemple de tentative d'attaque.

Une cavité 200 est creusée à partir de la face arrière en direction du circuit 104A. Un attaquant souhaite analyser le fonctionnement du circuit 104A situé au-dessus du fond de la cavité 200, et en déduire les informations convoitées. Les dimensions latérales de la cavité 200 sont typiquement supérieures à 100 µm, par exemple de l'ordre de 100 µm à 200 µm.

La cavité 200 correspond à une ouverture 202 dans l'écran 106. Une partie des photons 150 sort par l'ouverture 202 et n'est plus renvoyée vers l'écran 109 et le détecteur 108. Le détecteur 108 reçoit un nombre réduit de photons 150. Le circuit 120 émet alors un signal A. Le signal A peut être exploité par la puce pour prendre toute contre-mesure usuelle pour stopper l'attaque, ce qui permet de protéger les informations.

La puce 100 ainsi obtenue est protégée contre toute attaque par la face arrière, y compris des attaques au cours desquelles l'écran 106 est retiré partiellement ou totalement.

A titre de variante, la source 110 n'est pas activée pendant la phase de test. La valeur attendue de fréquence d'arrivée des photons est alors par exemple nulle, et le circuit 120 produit le signal A par exemple lorsque la valeur mesurée est supérieure à un seuil. En l'absence d'attaque, l'écran 106 évite que des photons arrivant sous la face arrière de la puce parviennent jusqu'au détecteur 108, directement ou après avoir été réfléchis par l'écran 109. L'écran 106 peut être métallique ou non métallique. En cas de tentative d'attaque, le détecteur 108 reçoit des photons 250, par exemple issus d'un laser (non représenté) utilisé pour mener une attaque ou provenant d'un éclairage ambiant. Le circuit 120 détecte alors la tentative d'attaque.

La puce peut mettre en oeuvre plusieurs phases de test telles que décrites ci-dessus, dans lesquelles la source 110 est active ou inactive.

L'écran 106 recouvre par exemple entièrement la face arrière du substrat. L'écran 106 permet alors, lorsqu'il est intact, d'empêcher divers photons parasites, provenant par exemple d'un éclairage ambiant, de parvenir jusqu'au détecteur 108. On peut obtenir, lorsque la source 110 est inactive, une valeur de fréquence d'arrivée de photons inférieure à 500 Hz en présence de l'écran 106. Ces photons proviennent du bruit environnant le détecteur. Lorsque la source 110 est active, la valeur de fréquence peut dépasser 10 MHz, de préférence 100 MHz. Par comparaison, lorsque l'écran 106 est absent, la fréquence mesurée est typiquement comprise entre 10 kHz et 100 kHz, par exemple 20 kHz, en raison de l'environnement de la puce. L'attaque est ainsi détectée d'une manière d'autant plus fiable que l'écart est élevé entre les valeurs de fréquence mesurées en l'absence et en présence d'une tentative d'attaque.

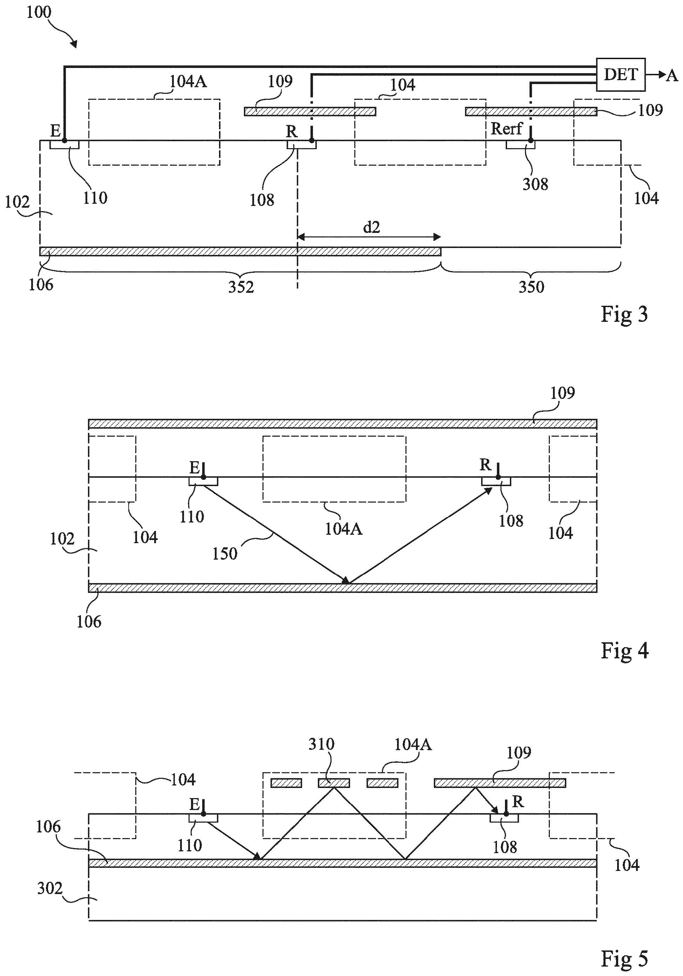

Les figures 3, 4 et 5 sont des vues en coupe, partielles et schématiques, de variantes de réalisation de la puce de la figure 1.

Dans la variante de la figure 3, la puce 100 comprend une portion 350 du substrat 102 laissée libre par l'écran 106. De préférence, l'écran 106 recouvre toutefois au moins l'intégralité de la face arrière d'une partie 352 du substrat 102. Cette partie 352 s'étend horizontalement à partir de l'aplomb du détecteur, de préférence sur une distance d2 supérieure à l'épaisseur du substrat, c'est-à-dire la distance séparant l'écran 106 de la face avant du substrat. La distance d2 est par exemple supérieure à 2 fois l'épaisseur du substrat. De préférence, cette partie du substrat s'étend horizontalement au moins sur la distance d2 dans toutes les directions à partir de l'aplomb du détecteur 108. On conserve alors une fiabilité de détection d'attaque telle que celle obtenue pour un écran 106 recouvrant entièrement la face arrière du substrat, tel que représenté en figure 1.

Un détecteur de photons 308 (Rref) est situé dans et sur la portion 350. La portion 350 dépourvue d'écran 106 s'étend horizontalement à partir de l'aplomb du détecteur 308, de préférence tout autour de l'aplomb du détecteur 308, sur une distance par exemple supérieure à l'épaisseur du substrat 350.

Le circuit 120 est prévu pour détecter un écart réduit entre des valeurs de fréquence d'arrivée de photons sur les détecteurs 108 et 308. Le signal d'alerte A est alors émis lorsque l'écart est inférieur à un seuil. Si, au cours d'une attaque, on retire une partie de l'écran 106 s'étendant à partir de l'aplomb du détecteur 108, la valeur de fréquence d'arrivée de photons sur le détecteur 108 se rapproche de la valeur de fréquence d'arrivée de photons sur le détecteur 308, et la tentative d'attaque est détectée et contrée.

Dans la variante de la figure 4, l'écran 109 recouvre l'ensemble de la face avant de la puce. L'écran 109 est par exemple une partie supérieure d'un boîtier dans lequel la puce est située. L'écran 109 est par exemple une couche polymère opaque. Dans ce cas, le détecteur 108 est configuré pour détecter les photons arrivant sur le détecteur 108 du côté de l'écran 106. En fonctionnement, des photons 150 émis par la source 110 en direction de l'écran 106 parviennent au détecteur 108 après réflexion par l'écran 106. A titre de variante, l'écran 109 est une couche métallique.

Selon un avantage, il est alors possible de détecter et contrer une attaque comprenant le retrait de tout ou partie de l'écran 109.

Dans la variante de la figure 5, la puce comprend un support 302 situé sous l'écran 106. Le support 302 est de préférence un matériau polymère, par exemple une résine, ou est métallique. Le support 302 permet de prévoir un substrat 102 mince, par exemple d'épaisseur inférieure à celle du support 302 ou par exemple inférieure à 80 µm, de préférence égale à environ 70 µm, encore plus de préférence égale à environ 30 µm, en conservant des propriétés mécaniques de la puce 100 suffisantes pour que la puce 100 puisse être manipulée facilement par des moyens courants. A titre d'exemple, l'épaisseur totale entre la face arrière du support 302 et la face avant du substrat 102 est comprise entre 100 µm et 200 µm, par exemple environ 140 µm.

Pendant une phase de test où la source 110 est active, des photons 150 sont réfléchis plusieurs fois, successivement par l'écran 106 et par le circuit 104A à protéger. Le circuit 104A réfléchit les photons par exemple du fait de la présence dans le circuit 104A de pistes d'interconnexion 310. Les pistes 310 interconnectent les composants du circuit 104A entre eux et sont comprises entre des couches d'isolant (non représentées). Le circuit 104A peut aussi réfléchir les photons du fait de variations d'indices de réfraction, par exemple entre le substrat et des couches d'isolant. La prévision d'un substrat 102 mince permet de limiter la distance entre l'écran 106 et les composants à protéger. Ceci permet de limiter la distance parcourue par les photons réfléchis plusieurs fois, et donc de limiter le nombre de photons qui sont absorbés avant de parvenir au détecteur 108. On augmente ainsi la fiabilité de la détection d'une attaque, par rapport à une puce dont le substrat n'est pas mince.

A titre d'exemple, pour fabriquer la puce de la figure 5, on réalise les circuits 104 dans et sur un substrat que l'on prévoit d'amincir par polissage jusqu'à l'épaisseur souhaitée. On recouvre de manière temporaire la face avant d'une plaque support, par exemple en verre, destinée à servir de poignée au cours du polissage. On polit ensuite la face arrière pour amincir le substrat. Après polissage, on forme l'écran 106 par métallisation de la face arrière, puis on forme le support 302.

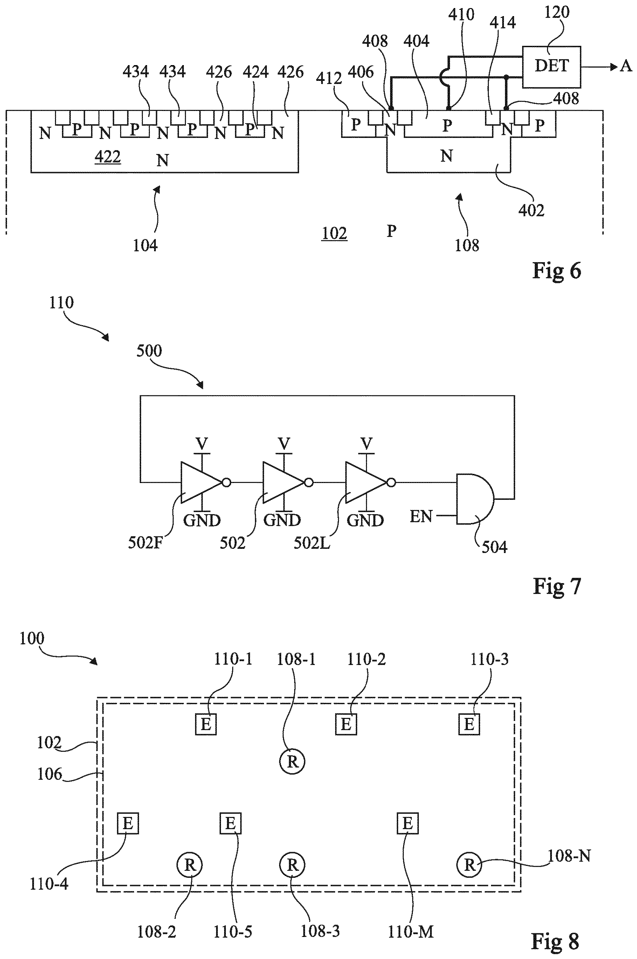

La figure 6 illustre de manière schématique un mode de réalisation d'un circuit 104 et du détecteur de photons 108 de la puce 100 de la figure 1, situés dans et sur le substrat 102 par exemple dopé de type P.

Le détecteur 108 comprend un caisson enterré 402 dopé de type N situé sous un caisson 404 dopé de type P. Les caissons 402 et 404 définissent respectivement la cathode et l'anode d'une diode SPAD. La périphérie du caisson N 402 est surmontée d'un caisson annulaire 406 dopé de type N. Le caisson N 406 entoure le caisson P 404 et est en contact avec le caisson N 402. Le caisson N 406 est surmonté de contacts 408 qui relient le caisson N 406 au circuit 120. Le caisson P 404 est surmonté d'un contact 410 qui relie le caisson P 404 au circuit 120. Un caisson 412 dopé de type P peut être formé autour du caisson N 406. Des tranchées d'isolement 414, remplies d'un isolant, s'étendent à partir de la face avant du substrat (face supérieure) entre les caissons 404, 406 et l'éventuel caisson 412.

Le circuit 104 comprend un caisson enterré 422 dopé de type N, situé sous et en contact avec des caissons 424 et 426 de types respectifs P et N alternés. Des tranchées d'isolement 434 s'étendent à partir de la face supérieure du substrat 102 entre les caissons P 424 et N 426 voisins. Des composants du circuit 104, non représentés, sont formés dans et sur les caissons P 424 et N 426.

Un avantage est que les caissons 402 et 422 peuvent être réalisés en même temps, les caissons 404, 412 et 424 peuvent être réalisés en même temps, les caissons 406 et 426 peuvent être réalisés en même temps, et les tranchées d'isolement 414 et 434 peuvent être réalisées en même temps. Ainsi, on peut obtenir la structure de la diode SPAD sans étape supplémentaire par rapport à la fabrication des circuits de la puce. Les caissons réalisés en même temps atteignent de préférence sensiblement la même profondeur dans le substrat, par exemple la même profondeur.

Les types de conductivité N et P du mode de réalisation de la figure 6 peuvent être échangés. Dans une variante, le caisson N 422 est omis.

La figure 7 illustre schématiquement un mode de réalisation de la source de photons 110 de la puce de la figure 1.

La source de photons 110 comprend un oscillateur en anneau 500. L'oscillateur en anneau 500 comprend des inverseurs 502 reliés en série, par exemple connectés en série. A titre d'exemple, trois inverseurs sont représentés. L'oscillateur en anneau peut comprendre tout nombre impair, de préférence supérieur ou égal à 3, d'inverseurs en série. La sortie de chaque inverseur 502 autre que le dernier inverseur (502L) de la série est reliée, par exemple connectée, à l'entrée de l'inverseur suivant. La sortie du dernier inverseur de l'association série est reliée à l'entrée d'une porte ET 504 dont l'autre entrée est prévue pour recevoir un signal d'activation EN. La sortie de la porte ET est reliée à l'entrée du premier inverseur (502F) de la série. Chaque inverseur comprend typiquement un transistor MOS à canal N et un transistor MOS à canal P, non représentés, reliés en série entre des noeuds d'application d'une tension d'alimentation, par exemple un noeud d'application d'un potentiel V et une masse GND. La tension d'alimentation est typiquement de l'ordre de 1 à 2 V.

En fonctionnement, chaque inverseur bascule entre des niveaux logiques bas et haut, de manière répétée à une fréquence par exemple supérieure à 100 MHz, de préférence supérieure à 1 GHz. A chaque basculement, les transistors MOS des inverseurs émettent des photons, issus de divers phénomènes de recombinaison d'électrons et de trous à l'intérieur des transistors.

On a ainsi obtenu une source de photons 110 ne comprenant que des transistors. Ceci permet de réaliser la source de photons 110 en même temps que les circuits 104 de la puce, sans nécessiter d'étape supplémentaire de fabrication.

A titre de variante, on pourra prévoir dans l'oscillateur un nombre pair d'inverseurs, et remplacer la porte ET par une porte NON-ET. La source de photons peut être tout autre circuit comprenant un ou plusieurs transistors prévus pour, en fonctionnement, successivement bloquer et laisser passer un courant, de préférence de manière répétée.

La figure 8 est une vue de dessus illustrant de manière partielle et schématique une variante de réalisation de la puce 100 de la figure 1.

La puce comprend un nombre M de sources de photons 110 (110-1 à 110-5, ..., 110-M) et un nombre N de détecteurs de photons 108 (108-1 à 108-3, ..., 108-N). Les sources 110 et les détecteurs 108 sont répartis parmi les circuits à protéger. Les sources 110 et les détecteurs 108 sont reliés au circuit 120, non représenté. L'écran 106 recouvre intégralement la face arrière de la portion du substrat dans et sur laquelle les sources 110, les détecteurs 108, et les composants à protéger des circuits sont formés. Les écrans 109 recouvrant les détecteurs ne sont pas représentés.

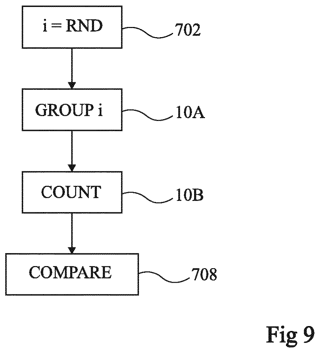

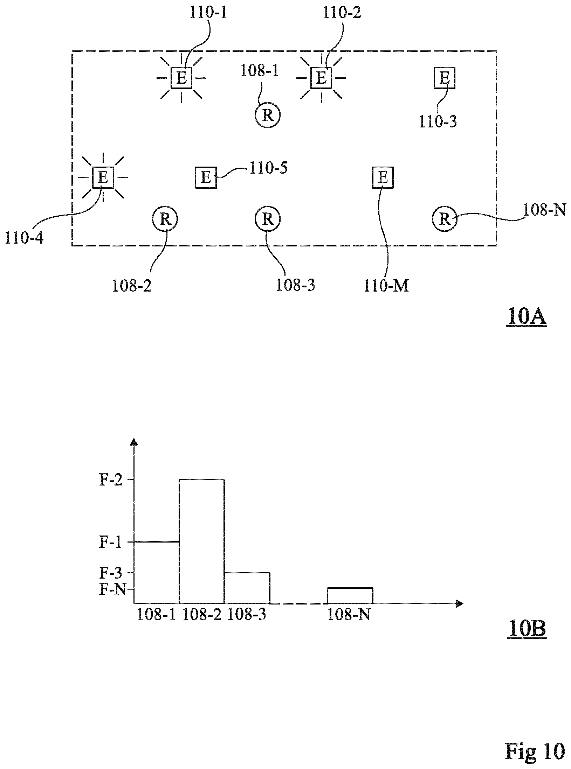

Les figures 9 et 10 illustrent des étapes d'un exemple de mise en oeuvre d'un procédé de protection de la puce de la figure 8.

Avant la mise en oeuvre des étapes de la figure 9, on a prédéfini P groupes de sources de photons, P étant un nombre entier. Chaque groupe comprend une ou plusieurs des sources de photons 110. A chaque groupe est associé un indice, par exemple ayant une valeur entière i comprise entre 1 et P.

A une étape 702 (i=RND), on choisit une valeur de l'indice i, de préférence aléatoirement. On sélectionne le groupe associé à l'indice i.

A une étape 10A (GROUP i), illustrée en figure 10, on active toutes les sources de photons du groupe sélectionné. Les autres sources de photons sont maintenues inactives. Dans l'exemple illustré, les sources 110-1, 110-2 et 110-4 sont activées.

A une étape 10B (COUNT), illustrée en figure 10, le circuit 120 compte les photons détectés par chacun des détecteurs et en déduit des valeurs mesurées F_1, ..., F_N de fréquence d'arrivée des photons sur les détecteurs respectifs 108-1, ..., 108-N. Chacune des valeurs F_1, ..., F_N dépend du groupe sélectionné.

A une étape 708 (COMPARE), chacune des valeurs mesurées est comparée à une valeur attendue. La valeur attendue correspond à la valeur mesurée lorsque l'écran 106 est intact, et est fonction du groupe sélectionné. Le circuit 102 émet alors un signal dès qu'une seule des valeurs mesurées présente, avec la valeur attendue, un écart supérieur à un seuil.

Un avantage est que la puce est protégée contre des attaques utilisant une ou plusieurs sources réglables de photons. Dans de telles attaques, l'attaquant retire au moins une partie de l'écran 106, puis utilise les sources pour envoyer des photons sur la face arrière. L'attaquant règle les sources afin de faire correspondre les valeurs mesurées de fréquence d'arrivée des photons sur les détecteurs 108 aux valeurs attendues correspondantes. Toutefois, grâce à la protection prévue dans le procédé décrit, aucun réglage des sources ne permet de mener à bien l'attaque. En effet, le groupe sélectionné change à chaque tentative d'attaque. En outre, lorsque la sélection du groupe est aléatoire, aucune séquence de réglage des sources ne permet de mener à bien l'attaque.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Puce électronique comprenant :
des premier (109) et deuxième (106) écrans superposés ;
un premier détecteur de photons (108) situé entre les premier et deuxième écrans ;
un substrat (102) ayant une face arrière recouverte par le deuxième écran, et une face avant dans et sur laquelle le premier détecteur (108) est situé, le deuxième écran (106) laissant libre la face arrière d'une portion (350) du substrat (102) ;
un deuxième détecteur de photons (308) situé dans et sur ladite portion (350) ; et
un circuit (120) pour détecter un écart réduit entre des valeurs de fréquence d'arrivée de photons sur les détecteurs.

2. Puce selon la revendication 1, dans laquelle le premier (109) écran et/ou le deuxième (106) écran est métallique.

3. Puce selon la revendication 1 ou 2, dans laquelle le premier (109) et/ou le deuxième (106) écran présente une surface pleine à l'aplomb du premier détecteur, de préférence s'étendant horizontalement dans toutes les directions à partir dudit aplomb sur au moins une première distance supérieure à une deuxième distance séparant l'écran considéré de la face avant du substrat.

4. Puce selon l'une quelconque des revendications 1 à 3, comprenant une source de photons (110), de préférence comprenant un oscillateur en anneau, agencée pour émettre des photons (150) vers une face du deuxième écran (106) tournée vers le premier détecteur (108).

5. Puce selon l'une quelconque des revendications 1 à 4, dans laquelle le premier détecteur (108) comprend une diode "Single Photon Avalanche Diode", SPAD.

6. Procédé de protection d'une puce selon l'une quelconque des revendications 1 à 5, comprenant une étape de détection d'un écart réduit entre des valeurs de fréquence d'arrivée de photons sur les détecteurs (103, 308).

7. Procédé selon la revendication 6, comprenant une étape de mesure d'une valeur représentative d'un nombre de photons détectés par le premier détecteur pendant une durée.

8. Procédé selon la revendication 7, comprenant une étape de détection d'un écart entre la valeur mesurée et une valeur attendue.

9. Procédé selon la revendication 7 ou 8, comprenant une étape de comparaison de la valeur mesurée à un seuil.

10. Procédé selon la revendication 9, dans lequel le seuil est une valeur représentative d'un nombre de photons détectés par le deuxième détecteur pendant ladite durée.

11. Procédé selon l'une quelconque des revendications 6 à 10, comprenant une étape (702) de sélection d'une ou plusieurs sources de photons.

12. Procédé selon la revendication 11, dans lequel l'étape de sélection (702) comprend la sélection aléatoire d'un groupe de sources de photons parmi plusieurs groupes prédéfinis, les sources de photons sélectionnées étant celles du groupe de photons sélectionné.

## Patentansprüche

1. Elektronischer Chip, der Folgendes aufweist:
erste (109) und zweite (106) übereinander angeordnete Abschirmungen;
einen ersten Photonendetektor (108), der zwischen der ersten und der zweiten Abschirmung angeordnet ist;
ein Substrat (102) mit einer Rückseite die mit der zweiten Abschirmung bedeckt ist und einer Vorderseite, in und auf der der erste Detektor (108) angeordnet ist, wobei die zweite Abschirmung (106) einen Teil (350) der Rückseite des Substrats (102) freilässt;
einen zweiten Photonendetektor (308), der in und auf dem Teil (350) angeordnet ist; und
eine Schaltung (120) zum Erfassen einer verringerten Abweichung zwischen Werten der Ankunftsfrequenz von Photonen auf den Detektoren.

2. Chip nach Anspruch 1, wobei die erste (109) Abschirmung und/oder die zweite (106) Abschirmung metallisch ist.

3. Chip nach Anspruch 1 oder 2, wobei die erste (109) und/oder die zweite (106) Abschirmung eine volle Oberfläche senkrecht zum ersten Detektor aufweist, die sich vorzugsweise horizontal in alle Richtungen zur senkrechten über mindestens eine erste Distanz erstreckt, die größer ist als eine zweite Distanz, die die jeweilige Abschirmung von der Vorderseite des Substrats trennt.

4. Chip nach einem der Ansprüche 1 bis 3, aufweisend eine Photonenquelle (110), die vorzugsweise einen Ringoszillator aufweist, der angeordnet ist, um Photonen (150) in Richtung einer Fläche der zweiten Abschirmung (106) zu emittieren, die dem ersten Detektor (108) zugewandt ist.

5. Chip nach einem der Ansprüche 1 bis 4, wobei der erste Detektor (108) eine Einzelphotonen-Avalanche-Diode, SPAD, aufweist.

6. Verfahren zum Schutz eines Chips nach einem der Ansprüche 1 bis 5, das einen Schritt des Detektierens einer verringerten Abweichung zwischen Werten der Ankunftsfrequenz von Photonen an den Detektoren (103, 308) aufweist.

7. Verfahren nach Anspruch 6, das einen Schritt des Messens eines Wertes aufweist, der für eine Anzahl der durch den ersten Detektor über einen Zeitraum hinweg detektierten Photonen repräsentativ ist.

8. Verfahren nach Anspruch 7, das einen Schritt des Detektierens einer Abweichung zwischen dem gemessenen Wert und einem erwarteten Wert aufweist.

9. Verfahren nach Anspruch 7 oder 8, das einen Schritt des Vergleichens des gemessenen Wertes mit einem Schwellenwert aufweist.

10. Verfahren nach Anspruch 9, wobei der Schwellenwert ein Wert ist, der für eine Anzahl der durch den zweiten Detektor über den Zeitraum hinweg detektierten Photonen repräsentativ ist.

11. Verfahren nach einem der Ansprüche 6 bis 10, das einen Schritt (702) des Auswählens einer oder mehrerer Photonenquellen aufweist.

12. Verfahren nach Anspruch 11, wobei der Auswahlschritt (702) das zufällige Auswählen einer Gruppe von Photonenquellen aus einer Vielzahl von vordefinierten Gruppen aufweist, wobei die ausgewählten Photonenquellen diejenigen der ausgewählten Photonengruppe sind.

## Claims

1. Electronic chip comprising:
first (109) and second (106) superimposed shields;
a first photon detector (108) located between the first and second shields;
a substrate (102) having a back face covered with the second shield, and a front face in and on which the first detector (108) is located, the second shield (106) leaving free the back face of a portion (350) of the substrate (102);
a second photon detector (308) located in and on said portion (350); and
a circuit (120) for detecting a reduced deviation between values of arrival frequency of photons on the detectors.

2. Chip according to claim 1, wherein the first (109) shield and/or the second (106) shield is metallic.

3. Chip according to claim 1 or 2, wherein the first (109) and/or the second (106) shield has a solid surface in direct line with the first detector, preferably extending horizontally in all directions from said direct line over at least one first distance greater than a second distance separating the considered shield from the front face of the substrate.

4. Chip according to any one of claims 1 to 3, comprising a photon source (110), preferably comprising a ring oscillator, arranged to emit photons (150) towards a face of the second shield (106) facing the first detector (108).

5. Chip according to any one of claims 1 to 4, wherein the first detector (108) comprises a Single Photon Avalanche Diode, SPAD.

6. Method of protecting a chip according to any one of claims 1 to 5, comprising a step of detecting a reduced deviation between values of arrival frequency of photons on the detectors (103, 308).

7. Method according to claim 6, comprising a step of measuring a value representative of a number of photons detected by the first detector over a time period.

8. Method according to claim 7, comprising a step of detecting a deviation between the measured value and an expected value.

9. Method according to claim 7 or 8, comprising a step of comparing the measured value to a threshold.

10. Method according to claim 9, wherein the threshold is a value representative of a number of photons detected by the second detector during said time period.

11. Method according to any one of claims 6 to 10, comprising a step (702) of selecting one or more photon sources.

12. Method according to claim 11, wherein the selecting step (702) comprises randomly selecting a group of photon sources from among a plurality of predefined groups, the selected photon sources being those of the selected photon group.
